# EUROPÄISCHE PATENTSCHRIFT

(11) **EP 3 347 760 B1**
(45) Veröffentlichungstag und Bekanntmachung des Hinweises auf die Patenterteilung: **06.11.2019**
(21) Anmeldenummer: 16778674.8
(22) Anmeldetag: 11.09.2016
(51) Int. Cl.: F41G 1/34, F41G 1/38, G02B 23/10, G02B 27/34

(54) **FERNOPTISCHE ZIELEINRICHTUNG MIT ZIELMARKENBELEUCHTUNG**
LONG-RANGE OPTICAL SIGHTING DEVICE HAVING TARGET MARK ILLUMINATION
DISPOSITIF DE VISÉE TÉLÉOPTIQUE À ÉCLAIRAGE DU REPÈRE DE VISÉE

(30) Priorität: 11.09.2015 DE 102015115328
(43) Veröffentlichungstag der Anmeldung: 18.07.2018
(73) Patentinhaber: Leica Camera AG, 35578 Wetzlar (DE)
(72) Erfinder: DENK, Robert, 35619 Braunfels (DE)
(74) Vertreter: Stamer, Jan
(86) Internationale Anmeldenummer: PCT/DE2016/100421
(87) Internationale Veröffentlichungsnummer: WO 2017/041792

(56) Entgegenhaltungen:
- EP-A1- 0 651 225
- EP-A1- 2 674 802
- DE-U1-202010 012 352

## Beschreibung

Die Erfindung betrifft eine fernoptische Zieleinrichtung, insbesondere ein Zielfernrohr mit einer schalt- und steuerbaren Zielmarkenbeleuchtung gemäß dem Oberbegriff des Anspruchs 1.

Fernoptische Zieleinrichtungen, wie zum Beispiel Zielfernrohre weisen üblicherweise eine Zielmarke, die auch Absehen genannt wird, auf, mit deren Hilfe ein Ziel anvisiert werden kann. Zur Einstellung eines optimalen Kontrastes zwischen Zielmarke und Ziel ist oftmals eine Lichtquelle zur Beleuchtung der Zielmarke vorgesehen.

Üblicherweise ist die Lichtquelle schaltbar ausgeführt, um sie vom Benutzer bedarfsweise ein- oder ausschalten zu können. Um die Beleuchtung der Zielmarke den Lichtverhältnissen und Umgebungsbedingungen, beispielsweise Tag- oder Dämmerungs- und Nachtbenutzung anpassen zu können, ist es bekannt, die Leuchtstärke bzw. Intensität der Lichtquelle einstellbar oder steuerbar auszuführen. Dazu können zwei Schalterstellungen vorgesehen sein, bei denen die Leuchtstärke zum Beispiel für eine Tag- oder Nachtbenutzung, jeweils manuell individualisiert werden.

Eine schaltbare Beleuchtungseinrichtung ist beispielsweise aus der DE 203 20 158 U1 bekannt. Das dort beschriebene Zielfernrohr weist eine hinsichtlich optisch-visueller Parameter steuerbare Zielmarke auf, wobei ein manuell betätigbarer Schalter vorgesehen ist, der ausgehend von einer Zwischenstellung zwischen zwei Schalterstellungen bewegbar ist. In einer ersten Schalterstellung wird die Beleuchtungsstärke erhöht und in einer zweiten Schalterstellung verringert. Der Drehschalter, die Beleuchtungselektronik und die Stromversorgung sind im sogenannten Absehenverstellbereich etwa in der Mitte des Zielfernrohrs integriert und somit entfernt von dem Ort des Absehens angeordnet. Das zu beleuchtende Absehen selber ist jedoch in einer Bildebene in der Nähe des Okulars angeordnet, so dass im Inneren des Zielfernrohrs lange elektrische Leitungen von der Elektronik im Absehenverstellbereich bis zum Absehen im Okularbereich verlegt werden müssen. Die Leitungsführung im Inneren des Zielfernrohrs engt den für die bewegliche Mechanik der Absehenverstellung und für die Optik nutzbaren Innenraum des Zielfernrohrs ungünstig ein. Die Leitungen befinden sich im Bereich der Optik, so dass ungewollte Reflexionen möglich sind. Lange elektrische Leitungen sind zudem störanfällig. Die Beleuchtungsintensität muss manuell an sich verändernde Umgebungslichtverhältnisse angepasst werden. Beim Übergang von Tageslicht in die späte Dämmerung oder umgekehrt muss die Leuchtpunkthelligkeit ständig manuell angepasst werden, damit der Leuchtpunkt das anvisierte Zielobjekt nicht überstrahlt. Geräusche und unnötige Bewegungen bei dieser Anpassung der Leuchtpunkthelligkeit sind unvermeidbar und beeinträchtigen die Jagd. Eine häufige Anpassung bzw. Nachjustierung bei sich verändernder Beleuchtungssituation, beispielweise beim Übergang von der Dämmerung zur Dunkelheit bei Nacht, führt zu einer erheblichen Unruhe, die ebenfalls nachteilig für die Jagd ist.

Aus der DE 20 2005 008 874 U1 ist eine Zieleinrichtung mit einer Lichtquelle zur Beleuchtung einer Zielmarke bekannt, die eine Steuer- und Regeleinrichtung aufweist, mit der verschiedene Betriebsmodi mit verschiedenen Leuchtstärken der Beleuchtung realisierbar sind. Auch bei dieser Zieleinrichtung sind der Drehschalter, die Beleuchtungselektronik und die Stromversorgung im Absehenverstellbereich in der Mitte des Zielfernrohrs angeordnet. Aus der Druckschrift EP 2 674 802 A1 ist ein fernoptisches Gerät in Form eines Zielfernrohres mit Objektiv, Umkehrsystem und Okular und einer abnehmbaren Einheit bekannt. Die Einheit mit von außen zugänglichen Bedienelementen ist im Bereich des Okulars abnehmbar auf dem Grundkörper des Zielfernrohres angeordnet und enthält neben einer Energieversorgung eine Steuerelektronik zur Steuerung einer als elektrischer Verbraucher im Grundkörper vorgesehenen Absehenbeleuchtung oder eines Laser-Entfernungsmessers. Zum Senden und Empfangen der Laserstrahlung ist in Richtung zum Objektiv in der abnehmbaren Einheit ein Messgerät vorhanden.

Bei an sich bekannten automatischen Helligkeitsanpassungen werden Lichtsensoren zur Erfassung/Messung der Umgebungshelligkeit genutzt. Die Lichtsensoren sind meist außen an einem Gehäuse angeordnet und erfassen allgemein die Helligkeit. Nachteilig ist, dass die Sensoren unbeabsichtigt verdeckt werden können, beispielsweise durch eine Abschattung mit der Kopfbedeckung des Benutzers oder der Überdachung eines Hochsitzes für Jäger. Die Lichtsensoren können auch durch außen an dem Zielfernrohr übergestülpte Schutzhüllen oder zum Schutz der Okular- und Objektivoptiken vorgesehenen Schutzkappen vollständig verdeckt und außer Funktion gesetzt werden. Wird der Lichtsensor beispielsweise bei hoher Helligkeit abgeschattet, erfolgt durch die automatische Helligkeitsregelung eine Fehlfunktionen der Art, dass die Absehenbeleuchtung auf einen Minimalwert geregelt wird, um die Abbildung des anvisierten Zielbereichs im Inneren des Zielfernrohrs nicht zu überstrahlen. Dieser Minimalwert weist jedoch für helle Lichtverhältnisse eine zu geringe Helligkeit auf und kann vom Beobachter nicht mehr als Leuchtpunkt wahrgenommen werden. Zur Vermeidung dieser Fehlfunktionen ist es bekannt, solche Sensoren mit hohem Aufwand im Zielfernrohrinneren im Bereich der Optik zu integrieren und auf diese Weise die Helligkeit des durch die Optik eintretenden Beobachtungslichtbündels und somit die Helligkeit in der zu beobachtenden Objektebene zu erfassen. Diese Anordnung erfordert einen hohen Platzbedarf für zusätzliche Stecker, Leiterbänder und Bauteile im engen Innenraum des Zielfernrohrs. Die Leiterbänder müssen vor elektrischen Störungen (EMV) geschützt und an der Optik vorbei verlegt werden und dürfen die optische Abbildung nicht durch Reflexionen beeinträchtigen. Oftmals kann auf diese Weise mit den Lichtsensoren lediglich im Randbereich Streulicht erfasst werden. Die Lichtsensoren erzeugen kaum auswertbare und nur schwer messbare schwache Signalströme. Diese Lösungen sind für Zielfernrohre mit kleinem Objektiv-Durchmesser ungeeignet. Sie sind zudem aufwändig und teuer, da bei der Herstellung eines Zielfernrohr mit integrierter Sensorik einerseits die Optik und andererseits auch die interne Elektronik montiert und Leiterbänder im Innern des Zielfernrohrs verlegt werden müssen. Der konstruktive Aufbau ist überdies serviceunfreundlich.

Aufgabe der Erfindung war es daher, die aufgezeigten Nachteile des Standes der Technik zu vermeiden und die Zieleinrichtung dahingehend zu verbessern, dass die Lichtquelle der Zielmarkenbeleuchtung nach einem Wiedereinschalten oder einem Betriebsartwechsel möglichst rasch oder sofort eine optimale Beleuchtungsstärke aufweist und diese auch bei sich verändernden Umgebungslichtverhältnissen beibehält oder sicherstellt. Eine weitere Aufgabe der Erfindung war es, den Kostenaufwand für eine automatisch steuerbare Zielmarkenbeleuchtung zu verringern und diese bei bekannten Zielfernrohrbauformen integrieren zu können, ohne deren optisches Design neu berechnen zu müssen oder es zu beeinträchtigen.

Diese Aufgaben werden bei einer fernoptischen Zieleinrichtung der eingangs genannten Art erfindungsgemäß durch die kennzeichnenden Merkmale des Anspruchs 1 gelöst. Vorteilhafte Ausgestaltungen sind Gegenstand der Unteransprüche.

Kerngedanke der Erfindung ist es, lichtempfindliche Sensoren zur Erfassung der Umgebungshelligkeit bei einer Zieleinrichtung, wie einem Zielfernrohr, dort anzuordnen, wo bereits Stromversorgung, Schalter und Elektronik z.B. für eine manuell einstellbare Zielmarkenbeleuchtung vorhanden sind. Kostengünstig kann auf diese Weise z.B. eine vorhandene Zielmarkenbeleuchtungs-Elektronikplatine um eine Helligkeitsmesselektronik und Steuerung für die Zielmarkenbeleuchtung erweitert werden. Eine modulare Bauweise, mit übereinander angeordneten, gegebenenfalls funktional getrennten Platinen ist ebenso möglich, wie eine beidseitige Bestückung einer vorhanden Platine mit zusätzlichen elektronischen Bauteilen für die Helligkeitsmessung und Intensitätssteuerung für die Beleuchtung auf der Unterseite der Platine. In einer besonders einfach handzuhabenden Ausführungsform der Erfindung sind die lichtempfindlichen Sensoren platzsparend auf der Unterseite der Platine angeordnet und mit der Steuerelektronik verbunden.

Wesentlich für die Erfindung ist auch die Erkenntnis, die lichtempfindlichen Sensoren so am Zielfernrohr anzuordnen, dass sie direkt auf die mit dem Zielfernrohr zu beobachtende Szenerie ausgerichtet sind. Auf diese Weise ist eine optimale Lichtausbeute für die Sensoren und damit eine bestmöglich zum Beobachtungsabschnitt passende Helligkeitsanpassung des Leuchtabsehens gewährleistet. Ist beispielsweise eine Beleuchtungselektronik mit Stromversorgung im Absehenverstellbereich, z.B. in dem Verstellturm für die vertikale mechanische Absehenverstellung, der in Gebrauchsstellung oben auf dem Zielfernrohr angeordnet ist, integriert, können erfindungsgemäß in Richtung des Objektivs auf der Vorderseite des Verstellturms eine oder mehrere Lichteintrittsöffnungen für eine lichtempfindliche Sensorik vorgesehen sein. Eine solche Anordnung ist vorteilhaft für Zielfernrohre mit beleuchtetem Absehen in der ersten Bildebene. Die lichtempfindliche Sensorik kann in diesem Fall zusätzlich zu der vorhandenen Beleuchtungselektronik integriert und zur automatischen Helligkeitssteuerung der Zielmarkenbeleuchtung eingerichtet sein. In einer besonders gut zu realisierenden Ausführungsform der Erfindung ist bei einer fernoptischen Zieleinrichtung bzw. einem Zielfernrohr, welches aus einem Objektiv, einem Okular, einem zwischen beiden angeordneten Umkehrsystem und einer Zielmarke in einem Gehäuse besteht, eine schalt- und steuerbare Zielmarkenbeleuchtung vorgesehen. Erfindungsgemäß ist am Gehäuse im Bereich des Okulars, in Betriebsstellung oben auf dem Gehäuse eine Bedienplattform mit manuell betätigbaren Schaltern angeordnet und in der Bedienplattform und/oder dem Gehäuseteil im Bereich des Okulars eine Energieversorgung, eine Steuerelektronik und eine lichtempfindliche Sensorik integriert. Die Bedienplattform kann als zylinderförmiger Aufsatz oder auf andere, sich geometrisch vom Gehäuse im Bereich des Okulars unterscheidende Weise ausgebildet sein. Die Bedienplattform weist in Richtung des Objektivs, vorteilhaft in einem Randbereich oder einem Umfangsbereich der Bedienplattform in Richtung des Objektivs eine oder mehrere Lichteintrittsöffnungen auf, um Licht auf die lichtempfindliche Sensorik im Inneren führen zu können. Auf diese Weise ist ein kurzer und damit störungsunanfälliger Verbindungsweg zwischen der lichtempfindlichen Sensorik und der Elektronik realisierbar und es sind keine zusätzlichen Leiterbänder, Kabel oder Verbindungsstecker erforderlich. Vorteilhaft muss auf diese Weise die eigentliche Optik des Zielfernrohrs nicht verändert oder angepasst werden.

Zur verbesserten Lichtleitung auf die lichtempfindliche Sensorik kann in den Lichteintrittsöffnungen zusätzlich ein Lichtleiter zur Sensorik vorgesehen sein. Vorteilhaft lässt sich auf diese Weise auch die Bedienplattform abdichten, so dass keine Feuchtigkeit eindringen kann. Ebenso ist es möglich, die Lichteintrittsöffnung mit einer Optik, wie einem Fenster, oder einer Linse gegen Eindringen von Feuchtigkeit zu verschließen.

In einer vorteilhaften Ausgestaltung der Erfindung ist die lichtempfindliche Sensorik in Ausnehmungen in der Bedienplattform eingefügt und über kurze elektrische Wege mit der Steuerelektronik verbunden. Auf diese Weise lassen sich zusätzliche Bauelemente integrieren, ohne die äußeren Abmessungen der Bedienplattform vergrößern zu müssen. Die Lichtleitung von den Lichteintrittsöffnungen zur Sensorik kann kostengünstig über kanalförmige Ausfräsungen im Gehäusematerial der Bedienplattform erfolgen. Die Ausfräsungen können blank poliert sein, um Licht sammeln und auf die lichtempfindliche Sensorik führen zu können. In vorteilhafter Weise enthalten die Lichteintrittsöffnungen jedoch eine Optik zur Lichtleitung auf einen oder mehrere lichtempfindliche Sensoren. Auf diese Weise sind keine mechanischen Maßnahmen an dem die Optik enthaltenden Gehäuseteil des Zielfernrohrs nötig, so dass eine Erweiterung der Funktion ausschließlich im Bereich der Bedienplattform erfolgt und eine Schutz-Gasfüllung der Optik nicht beeinträchtigt wird, bzw. in einem von der Fertigung und Montage der Elektronik für die Beleuchtung unabhängigen Arbeitsgang bei der mechanisch optischen Herstellung des Zielfernrohr erfolgen kann.

In vorteilhafter Weise können durch eine paarige Anordnung von zwei im Randbereich der Bedienplattform angeordneten Lichteintrittsöffnungen sich überlappende Lichtkegel erfasst bzw. Lichtempfangsstrahlenbündel erzeugt werden, die bei einer Ausrichtung auf die Beobachtungsebene in Objektivrichtung ansonsten durch einen Absehenturm oder ein vom Durchmesser her großes Objektiv abgeschattet werden würden. Durch eine Überlappung der erfassten Lichtkegel der Sensorbereiche wird eine Überschneidung eines fotogeometrischen Empfindlichkeitsbereichs nahe der optischen Achse erzeugt, der zur Gewichtung eines zentralen Bereichs der Beobachtungsebene führt und damit eine höhere Empfindlichkeit in der Mitte bzw. der Nähe der optischen Achse des Zielfernfernrohrs gewährleistet. Dies ist besonders vorteilhaft, da sich auch ein Leuchtpunkt, der in seiner Intensität gesteuert werden soll auf der optischen Achse befindet und zur zuverlässigen Wahrnehmung entsprechend heller angesteuert werden kann.

Zum Schutz vor ungewolltem Streulichteinfluss und mechanischer Beschädigung des Lichteintritts der Lichtleiter sind diese in einer beispielsweise eingefrästen Ausnehmung in der Bedienplattform versenkt angeordnet. Alternativ kann eine Lichteintrittsöffnung auch durch zusätzliche lichtdurchlässig oder mit einem speziellen optischen Filter vergüteten Abdeckfenster vor mechanischen Einflüssen geschützt werden. Als weitere Optimierungsmaßnahme kann die Kontur der Bedienplattform zum mechanischen Schutz der Lichtleiter und Lichteintrittsöffnung derart verändert werden, dass der Lichteintritt gegenüber seitlich und von oben störendem Streulicht abgeschattet ist. Der gleiche mechanische und optische Schutzeffekt lässt sich durch, um die Eintrittsöffnung herum geformte, separate Schutztrichter erzielen.

Die Zielmarkenbeleuchtung kann wahlweise manuell über vorhandene Schalter oder durch die Steuerelektronik automatisch, in Abhängigkeit der mithilfe der lichtempfindlichen Sensorik ermittelten Umgebungslichtverhältnisse in ihrer Intensität steuerbar sein. Auf einfache Weise kann z.B. mit einem drei Positionen aufweisenden Schwenkschalter, der in einer Ruhe- oder Nullstellung die Zielmarkenbeleuchtung deaktiviert, in einer beispielsweise nach links verschwenkten Stellung ein ungesteuerter manuell in seiner Intensität verstellbarer Mode mit vorgegebener Helligkeitskennlinie aktiviert werden. In dieser Einstellung kann vorgesehen sein, die vorgegebene Helligkeitskennlinie durch Betätigung eines weiteren Schalters, beispielsweise eines Wippschalters - oder Drehgebers, in bekannter Weise derart in Schaltstufen zu verschieben, dass die Intensität der Zielmarkenbeleuchtung an die Umgebungslichtverhältnisse und das Sehempfinden des Benutzers optimal angepasst wird.

In einer beispielsweise nach rechts verschwenkten Stellung ist ein automatischer, sensorgesteuerter Mode für die Intensität der Helligkeit der Zielmarkenbeleuchtung realisierbar.

In dieser Schwenkstellung kann zunächst eine vorprogrammierte, nicht sensorgestützte und überwiegend konstante, auf einen Maximalwert eingestellte Intensität der Zielmarkenbeleuchtung für Tagbeleuchtungsverhältnisse realisiert sein. Erfindungsgemäß kann für den Übergang von Tagbeleuchtungsverhältnissen bis hin zu Dämmerungs- oder Nachtbeleuchtungsverhältnissen eine individuelle, sensorgestützte Herabregelung der Intensität der Zielmarkenbeleuchtung entlang einer Kennlinie realisiert sein. Auch in dieser Einstellung kann es vorgesehen sein, die vorgegebene Helligkeitskennlinie durch Betätigung eines weiteren Schalters, beispielsweise eines Wippschalters oder Drehgebers, derart zu verschieben, dass die Intensität der Zielmarkenbeleuchtung an die Umgebungslichtverhältnisse und das Sehempfinden des Benutzers optimal angepasst wird.

Für Benutzer, die sich auf eine automatische Regelung der Intensität nicht verlassen möchten, kann ich einer beispielsweise nach links verschwenkten Stellung ein herkömmlicher manueller Mode vorgesehen sein.

In einer weiteren vorteilhaften Ausführung der Erfindung kann in der einen Schwenkstellung eine sensorgestützte variable Zielmarkenbeleuchtung mit einer ersten Kennlinie für dunkle Umgebungsbeleuchtungssituationen vorgesehen sein. Diese Einstellung ist z.B. besonders geeignet für den Übergang von der Dämmerung zur Nacht-Dunkelheit (Nachmittags-Nachtansitz). In einer zweiten Schwenkstellung kann dann eine sensorgestützte variable Zielmarkenbeleuchtung mit einer zweiten Kennlinie für helle Umgebungsbeleuchtungssituationen vorgesehen sein. Diese Einstellung kann dann z.B. für den Übergang von der morgendlichen Dämmerung zur Tageslicht-Helligkeit (Morgen- bzw. Tagansitz) optimiert werden.

Zur manuellen Einstellung der Helligkeit in der einen oder der anderen Schwenk-Schalterstellung können zusätzlich Druck-, Tast-, Dreh- oder Wippschalter vorgesehen sein. Befindet sich der Schwenkschalter z.B. in der Stellung für Tagansitz oder der für Nachtansitz, kann mit einem der Schalter die Helligkeit erhöht und mit einem anderen der Schalter die Helligkeit verringert werden. Erfindungsgemäß kann mit den Schaltern auch alternativ das Niveau für die automatisch gesteuerte Intensität der Zielmarkenbeleuchtung verändert werden.

Besonders vorteilhaft weist die fernoptische Zieleinrichtung eine Programmierschnittstelle für die Einstellung individueller Niveaus für die Nacht- und die Tageinstellung auf. Auf diese Weise kann die Dynamik der Intensität, also der absolute Unterschied des sensorgestützten einstellbaren Minimalwertes zum Maximalwert in der Tageinstellung größer sein als in der Nachteinstellung. Die Bedienplattform oder das Gehäuse im Okularbereich zur Aufnahme der Absehenbeleuchtung kann, insbesondere zu Programmierzwecken abnehmbar ausgeführt sein. Im abgenommenen Zustand können Kontakte für eine Programmierschnittstelle zugänglich sein, alternativ können Programmierungen auch über eine drahtlose Funkschnittstelle, wie WLAN, Blue-Tooth, NFC oder dergleichen realisierbar sein. Für eine besonders kostengünstige Herstellung ist die Anordnung der Sensoren für einen kurzen elektrischen Anschluss an die Steuerelektronik, vorzugsweise unmittelbar auf der Elektronikplatine, insbesondere auf der Unterseite der Platine ausgebildet. In besonders vorteilhafter Weise werden intelligente Helligkeitssensoren, in die bereits Verstärker- und Analog/Digitalwandler integriert sind verwendet. Auf diese Weise braucht das Layout einer vorhandenen Zielmarkenbeleuchtung im Wesentlichen nur gering verändert werden, da ein Digitalausgang eines Sensors unmittelbar an einen Digitaleingang eines eventuell ohnehin vorhandenen Mikroprozessors angeschlossen werden kann.

In der Zeichnung ist ein Ausführungsbeispiel der Erfindung schematisch dargestellt und wird nachfolgend anhand der Figuren näher beschrieben. Dabei zeigen
- Fig. 1: eine Aufsicht auf das Zielfernrohr
- Fig. 2: eine perspektivische Ansicht des Zielfernrohrs
- Fig. 3a, b: einen Querschnitt durch die Bedienplattform mit Okularbereich
- Fig. 4a, b: einen ersten und einen zweiten Kennlinienverlauf
- Fig. 5: Diagramm mit mehreren Kennlinien.

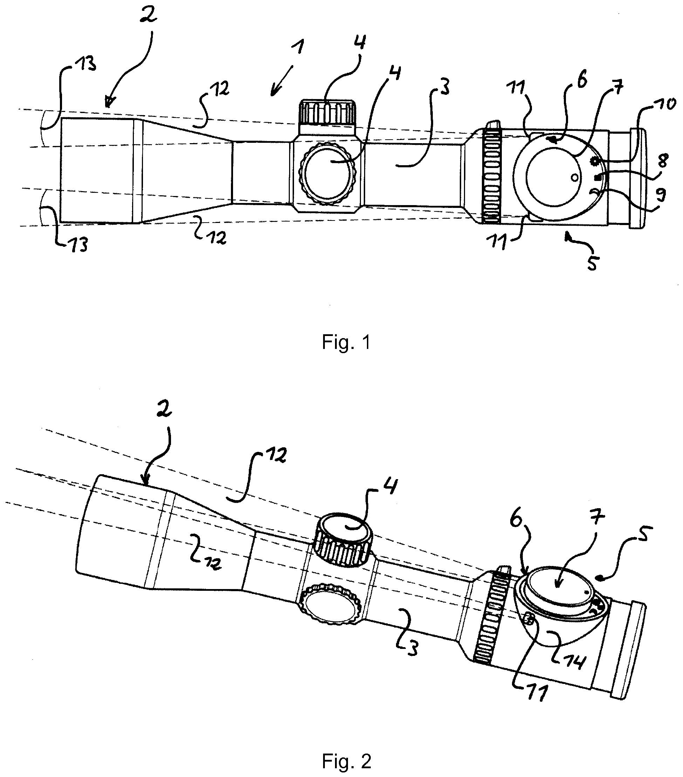

Das in Fig. 1 dargestellte Zielfernrohr 1 enthält ein Objektiv 2, ein Tubusgehäuse 3 mit Verstelltürmen 4 zur Verstellung eines nicht weiter dargestellten Absehens und ein Okular 5. Im Tubusbereich des Okulars 5 ist ein zylinderförmiger Aufsatz 6 mit integrierten, nicht weiter dargestellten Elektronik-Elementen aufgesetzt. Der zylinderförmige Aufsatz 6 ist als Bedienplattform ausgebildet und weist einen Dreh-Schwenkschalter 7 mit integrierter, nicht dargestellter Schaltwippe auf. Für eine nicht weiter dargestellte Absehenbeleuchtung weist der Dreh-Schwenkschalter 7 eine Nullstellung 8, einer Nachtbeleuchtungsstellung 9 und einer Tagbeleuchtungsstellung 10 auf. Im Seitenbereich bzw. Umfangbereich der als zylinderförmiger Aufsatz ausgebildeten Bedienplattform 6 sind Lichteintrittsöffnungen 11 schematisch dargestellt. Beiden Lichteintrittsöffnungen 11 sind kegelförmige Lichtempfangsstrahlenbündel 12 zugeordnet. Die Lichtempfangsstrahlenbündel 12 weisen jeweils einen Öffnungswinkel 13 von zwischen 2° und 20° auf. Vorzugsweise beträgt der jeweilige Öffnungswinkel 10°.

Die in Fig. 2 dargestellte perspektivische Ansicht des Zielfernrohrs 1 zeigt, wie die Lichtempfangsstrahlenbündel 12 zwischen, bzw. an den Verstelltürmen 4 vorbei in Richtung des Objektivs 2 verlaufen. Eine Lichteintrittsöffnung 11 ist im Randbereich 14 der Bedienplattform 6 angeordnet.

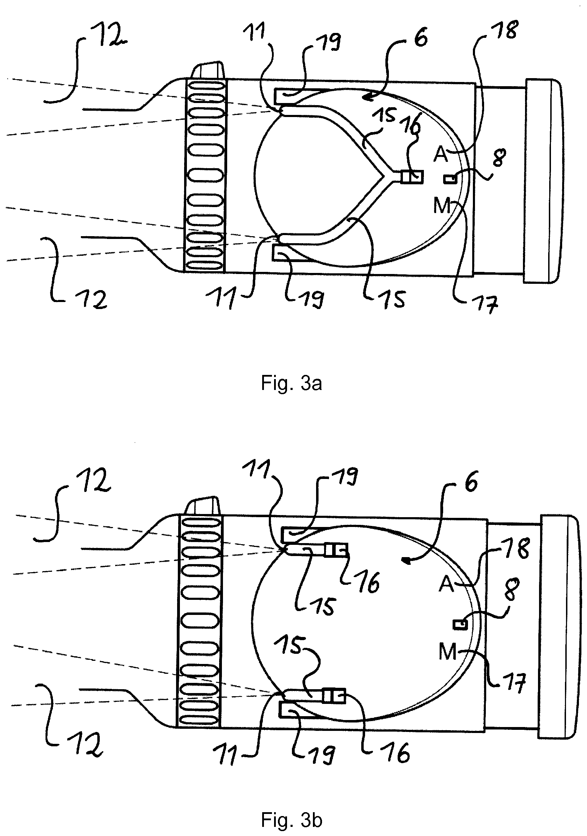

In Fig. 3a ist eine Aufsicht auf den Okularbereich mit Querschnitt der Bedienplattform 6 dargestellt. Die Lichtempfangsstrahlenbündel 12 treffen auf die Lichteintrittsöffnungen 11 und werden über eine ypsilonförmig verlaufende Optik 15 zur Lichtleitung auf eine einzelne lichtempfindliche Sensorik 16 geführt. Die Lichteintrittsöffnungen 11 sind zum mechanischen Schutz durch im Randbereich 14 der Bedienplattform 6 seitliche neben den Lichteintrittsöffnungen 11 angeformten, schematisch dargestellten Konturen 19, die auch als um die Lichteintrittsöffnung 11 herum geformte separate Schutztrichter 19 ausgeführt sein können vor seitlich eintreffenden Streulichtstrahlen geschützt. Eine in Fig. 3a und 3b schematisch ausgeführte Variante des aufgrund der Querschnittdarstellung nicht dargestellten Dreh-Schwenkschalters 7 (Fig. 1 und2) zum Einstellen weiterer Beleuchtungsmodi weist in dieser Darstellung neben der Nullstellung 8, in der die Absehenbeleuchtung ausgeschaltet ist, eine Manuellbeleuchtungseinstellung 17 und eine Automatikbeleuchtungseinstellung 18 auf.

In Fig. 3b ist ebenfalls eine Aufsicht auf den Okularbereich mit Querschnitt der Bedienplattform 6 dargestellt. Die Lichtempfangsstrahlenbündel 12 treffen auf die durch Schutztrichter 19 geschützten Lichteintrittsöffnungen 11. Jeder Lichteintrittsöffnung 11 sind separate Optiken 15 zur Lichtleitung zugeordnet, die das einfallende Licht auf separate lichtempfindliche Sensoriken 16 leiten. Die lichtempfindlichen Sensoriken 16 sind mit einer, in der Bedienplattform 6 integriert angeordneten, nicht dargestellten Elektronikplatine verbunden.

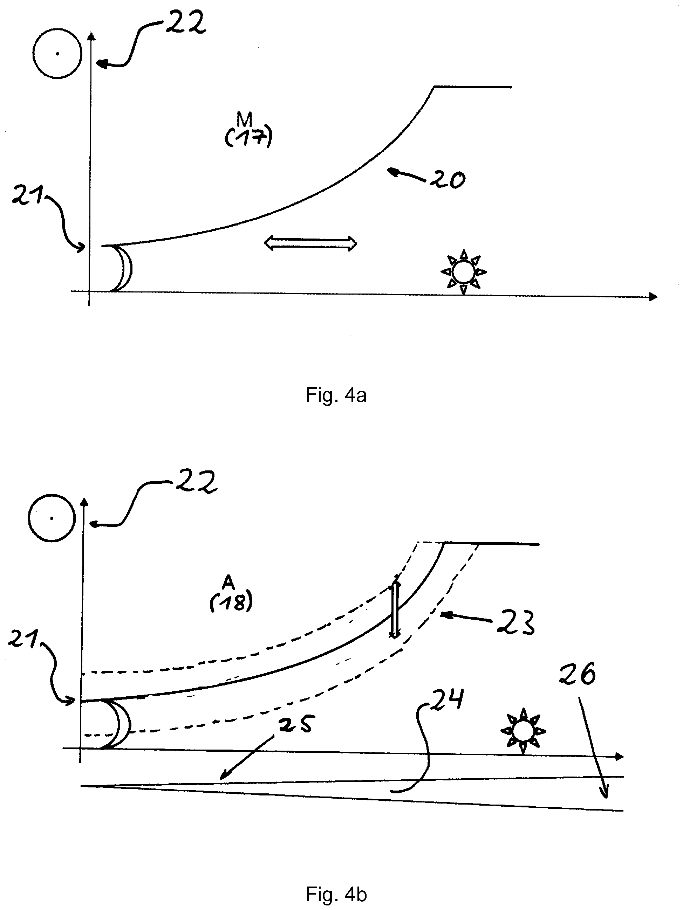

Der in Fig. 4a dargestellte erste Kennlinienverlauf 20 entspricht einer Manuellbeleuchtungseinstellung 17. Auf der mit einem Punkt im Kreis gekennzeichneten y-Achse ist die Intensitätsstärke der Absehenbeleuchtung von einem niedrigen (= Absehenbeleuchtung dunkel) 21 zu einem hohen (= Absehenbeleuchtung hellen) 22 Wert dargestellt. Die Werte des Kennlinienverlaufs 20 können durch manuelle Einstellung in Schalterstufen, beispielsweise mit einer Schaltwippe horizontal entlang der X-Achse ausgewählt, bzw. eingestellt werden. In dem für Nacht- und Dämmerungsverhältnisse niedrigen Wertebereich ändert sich die Intensität der Absehenbeleuchtung zunächst langsam und wird dann stärker bis auf einen Maximalwert (hohe Intensität 22), schematisch durch einen parallel zur X-Achse verlaufenden Abschnitt des Kennlinienverlaufs 20 dargestellt, erhöht.

In Fig. 4b ist ein zweiter Kennlinienverlauf 23, der sensorgesteuert in der Automatikbeleuchtungseinstellung 18 zur Anwendung kommt, dargestellt. Auch in Fig. 4b ist die Y-Achse mit einem Punkt im Kreis gekennzeichnet und entspricht der Intensitätsstärke der Absehenbeleuchtung, beginnend bei einem niedrigen (= Absehenbeleuchtung dunkel) 21 zu einem hohen (= Absehenbeleuchtung hellen) 22 Wert. Der voreingestellt oder programmierte Kennlinienverlauf 23 ist durch eine durchgezogen Kurve mit parallel zur X-Achse verlaufendem Maximalwert (hohe Intensität 22) entsprechenden Kurvenabschnitt dargestellt. Die Intensität der Absehenbeleuchtung wird automatisch anhand des an der X-Achse als nach rechts sich öffnender Trichter dargestelltes Sensorsignal 24 gesteuert. Der schmale Bereich 25 des Sensorsignals 24 entspricht dunklen Nacht- und Dämmerungsverhältnissen in der Beobachtungsebene, während der sich öffnende Bereich 26 dem Übergang von der Morgendämmerung zu Tageslichtverhältnissen entspricht. Je heller die Lichtverhältnisse in der Beobachtungsebene, desto größer ist auch das Sensorsignal 24 und desto höher muss die Intensität der Absehenbeleuchtung gesteuert werden. Das Niveau des zweiten Kennlinienverlaufs 23 kann durch manuelle Einstellung in Schalterstufen beispielsweise mit einer Schaltwippe oder über eine Programmierschnittstelle, im Bereich des Übergangs von der Morgendämmerung zu Tageslichtverhältnissen erhöht oder verringert werden und ist schematisch durch gestrichelte Linien dargestellt.

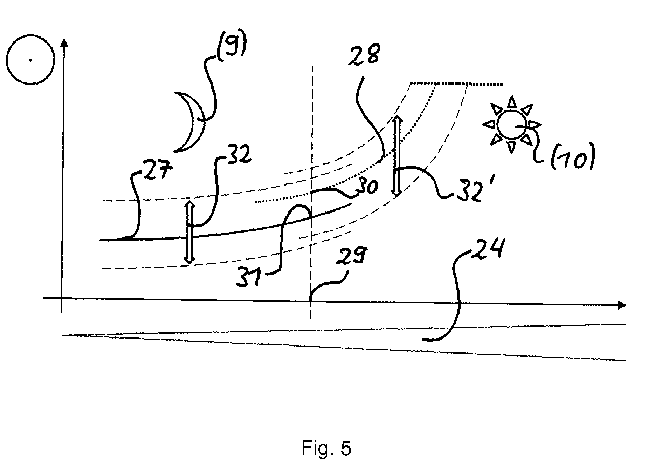

In Fig. 5 ist ein Diagramm mit mehreren Kennlinien für eine automatische, anhand des Sensorsignals 24 gesteuerte Absehenbeleuchtung dargestellt. Die Kennlinie 27 mit niedriger resultierender Intensität für die Absehenbeleuchtung ist der Nachtbeleuchtungseinstellung 9 des Schalters 7 aus Fig. 1 zugeordnet. Die Kennlinie 28 mit höherer resultierender Intensität für die Absehenbeleuchtung ist der Tagbeleuchtungseinstellung 10 zugeordnet. Auf diese Weise kann die Intensität der Absehenbeleuchtung bei demselben Wert 29 des Sensorsignals 24 in der Tagbeleuchtungseinstellung 10 einen anderen, z.B. höheren Wert 30 aufweisen, während dieselbe in der Beobachtungsebene gemessene Helligkeit mit demselben Wert 29 des Sensorsignals 24 in der Nachtbeleuchtungseinstellung 9 einen niedrigeren Wert 31 aufweist. Das Niveau der beiden Kennlinien 27 für Nachtbeleuchtung und 28 für Tagbeleuchtung kann durch manuelle Einstellung in Schalterstufen beispielsweise mit einer Schaltwippe oder über eine Programmierschnittstelle in Richtung der Y-Achse im Rahmen einer Bandbreite 32, 32' verschoben werden. Die maximal veränderbare Niveauverschiebung ist durch Doppelpfeile 32 schematisch dargestellt und durch gestrichelte Niveau-Linien verdeutlicht.

### Bezugszeichenliste

- 1: Zielfernrohr
- 2: Objektiv
- 3: Tubusgehäuse
- 4: Verstelltürme
- 5: Okular
- 6: zylindrischer Aufsatz/Bedienplattform
- 7: Schalter
- 8: Nullstellung
- 9: Nachtbeleuchtungsstellung
- 10: Tagbeleuchtungsstellung
- 11: Lichteintrittsöffnungen
- 12: Lichtempfangsstrahlenbündel
- 13: Öffnungswinkel
- 14: Randbereich, Umfangsbereich
- 15: Optik zur Lichtleitung
- 16: Lichtempfindliche Sensorik
- 17: Manuellbeleuchtungseinstellung
- 18: Automatikbeleuchtungseinstellung
- 19: angeformte Kontur/Schutztrichter
- 20, 23, 27, 28: Kennlinienverläufe
- 21: niedrige Intensität Absehenbeleuchtung
- 22: hohe Intensität Absehenbeleuchtung
- 24: Sensorsignal
- 25: schmaler Bereich Sensorsignal (dunkel)
- 26: breiter Bereich Sensorsignal (hell)
- 29: ein Wert des Sensorsignals
- 30: höheren Wert/Tagbeleuchtungseinstellung
- 31: niedriger Wert/Nachtbeleuchtungseinstellung
- 32, 32': Doppelpfeile

## Patentansprüche

1. Fernoptische Zieleinrichtung, insbesondere Zielfernrohr (1) mit einem ein Objektiv (2), ein Okular (5), ein Umkehrsystem und eine Zielmarke aufweisenden Gehäuse mit einer über eine Bedienplattform (6) schalt- und steuerbaren Zielmarkenbeleuchtung, wobei am Gehäuse im Bereich des Okulars (5), in Betriebsstellung oben auf dem Gehäuse die Bedienplattform (6) mit einem oder mehreren manuell betätigbaren Schaltern (7) angeordnet ist und in der Bedienplattform (6) und/oder dem Gehäuse im Bereich des Okulars (5) eine Energieversorgung, eine Steuerelektronik und eine lichtempfindliche Sensorik (16) zur Erfassung der Umgebungshelligkeit integriert sind, wobei die Bedienplattform (6) in Richtung des Objektivs (2) eine oder mehrere Lichteintrittsöffnungen (11) für die lichtempfindliche Sensorik (16) aufweist.

2. Fernoptische Zieleinrichtung nach Anspruch 1, **dadurch gekennzeichnet, dass** die eine oder die mehreren Lichteintrittsöffnungen (11) in einem Randbereich (14) der Bedienplattform (6) angeordnet ist/sind.

3. Fernoptische Zieleinrichtung nach Anspruch 1 oder 2, **dadurch gekennzeichnet, dass** die lichtempfindliche Sensorik (16) in Ausnehmungen in der Bedienplattform (6) eingefügt ist und mit der Steuerelektronik verbunden ist.

4. Fernoptische Zieleinrichtung nach einem der Ansprüche 1 bis 3, **dadurch gekennzeichnet, dass** die eine oder die mehreren Lichteintrittsöffnungen (11) eine Optik (15) zur Lichtleitung auf einen oder mehrere lichtempfindliche Sensoren (16) aufweist.

5. Fernoptische Zieleinrichtung nach Anspruch 4 **dadurch gekennzeichnet, dass** Lichtempfangsstrahlenbündel (12) durch die Optik (15) in der oder den beabstandet zueinander angeordneten Lichteintrittsöffnungen (11) derart geformt sind, dass sie in Objektivrichtung, an etwaigen Verstelltürmen (4) einer Absehenverstellung oder einem Außenrandbereich des Objektivs (2) vorbei, auf die durch das Objektiv beobachtete Raum gerichtet ist/sind.

6. Fernoptische Zieleinrichtung nach einem der vorhergehenden Ansprüche, **dadurch gekennzeichnet, dass** die Zielmarkenbeleuchtung wahlweise manuell über die Schalter (7), oder durch die Steuerelektronik automatisch, in Abhängigkeit der mithilfe der lichtempfindlichen Sensorik (16) ermittelten Umgebungslichtverhältnisse, in ihrer Intensität steuerbar ist.

7. Fernoptische Zieleinrichtung nach einem der vorhergehenden Ansprüche, **dadurch gekennzeichnet, dass** die Steuerelektronik zwei oder mehrere, über Schalterstellungen (8, 9, 10, 17, 18) wählbare Kennlinien (20, 23, 27, 28) mit unterschiedlichem, oder veränderbarem Niveau für die Intensität der Zielmarkenbeleuchtung aufweist.

8. Fernoptische Zieleinrichtung nach Anspruch 7, **dadurch gekennzeichnet, dass** das jeweilige, den Schalterstellungen (8, 9, 10, 17, 18) zugeordnete Niveau der Intensität der automatischen Zielmarkenbeleuchtung mit weiteren Bedienelementen oder über eine externe Programmierschnittstelle individuell veränderbar ist.

9. Fernoptische Zieleinrichtung nach einem der vorhergehenden Ansprüche, **dadurch gekennzeichnet, dass** die Anordnung des oder der Sensoren (16) zum unmittelbaren oder über einen kurzen Leitungsweg elektrischen Anschluss an die Steuerelektronik in der Bedienplattform (6) ausgebildet ist.

10. Fernoptische Zieleinrichtung nach einem der vorhergehenden Ansprüche, **dadurch gekennzeichnet, dass** durch eine paarige Anordnung der Sensoren (16) eine Überschneidung eines fotogeometrischen Empfindlichkeitsbereichs nahe der optischen Achse der fernoptischen Zieleinrichtung zur Gewichtung eines zentralen Bereichs in Beobachtungsrichtung gewährleistet ist.

## Claims

1. Long-range optical sighting device, in particular a telescopic sight (1), comprising a housing, which comprises an objective (2), an eyepiece (5), a reversing system and a target mark and which has target mark illumination that is switchable and controllable via an operating platform (6), wherein the operating platform (6) having one or a plurality of manually actuatable switches (7) is arranged on the housing in the region of the eyepiece (5), on the top of the housing in the operating position, and a power supply, control electronics and a light-sensitive sensor system (16) for detecting the ambient brightness are integrated in the operating platform (6) and/or the housing in the region of the eyepiece (5), wherein the operating platform (6) comprises one or a plurality of light entrance openings (11) for the light-sensitive sensor system (16) in the direction of the objective (2).

2. Long-range optical sighting device according to Claim 1, **characterized in that** the one or the plurality of light entrance openings (11) is/are arranged in an edge region (14) of the operating platform (6).

3. Long-range optical sighting device according to Claim 1 or 2, **characterized in that** the light-sensitive sensor system (16) is inserted in recesses in the operating platform (6) and is connected to the control electronics.

4. Long-range optical sighting device according to any of Claims 1 to 3, **characterized in that** the one or the plurality of light entrance openings (11) comprise(s) an optical unit (15) for guiding light onto one or a plurality of light-sensitive sensors (16).

5. Long-range optical sighting device according to Claim 4, **characterized in that** light reception beams (12) are shaped by the optical unit (15) in the light entrance opening (11) or the light entrance openings (11) arranged at a distance from one another in such a way as to be directed in the objective direction, past possible adjustment turrets (4) of a reticle adjustment or an outer edge region of the objective (2), at the space observed through the objective.

6. Long-range optical sighting device according to any of the preceding claims, **characterized in that** the intensity of the target mark illumination is controllable either manually via the switches (7) or automatically by the control electronics, depending on the ambient light conditions determined with the aid of the light-sensitive sensor system (16).

7. Long-range optical sighting device according to any of the preceding claims, **characterized in that** the control electronics comprise two or more characteristic curves (20, 23, 27, 28) which are selectable via switch positions (8, 9, 10, 17, 18) and which have different or variable levels for the intensity of the target mark illumination.

8. Long-range optical sighting device according to Claim 7, **characterized in that** the respective level of the intensity of the automatic target mark illumination that is assigned to the switch positions (8, 9, 10, 17, 18) is individually variable by means of further operating elements or via an external programming interface.

9. Long-range optical sighting device according to any of the preceding claims, **characterized in that** the arrangement of the sensor (s) (16) is configured for direct electrical connection, or electrical connection via a short line path, to the control electronics in the operating platform (6).

10. Long-range optical sighting device according to any of the preceding claims, **characterized in that** a paired arrangement of the sensors (16) ensures an overlap of a photogeometric sensitivity range near the optical axis of the long-range optical sighting device for the weighting of a central region in the observation direction.

## Revendications

1. Dispositif de visée téléoptique, en particulier lunette de visée (1) avec un boîtier présentant un objectif (2), un oculaire (5), un système d'inversion et un repère de visée, doté d'un éclairage du repère de visée pouvant être commuté et commandé par l'intermédiaire d'une plate-forme de commande (6), dans lequel la plate-forme de commande (6) est disposée sur le boîtier dans la région de l'oculaire (5), en position de fonctionnement sur le dessus du boîtier, avec un ou plusieurs commutateurs actionnables manuellement (7) et une alimentation en énergie, une électronique de commande et des capteurs sensibles à la lumière (16) pour détecter la luminosité ambiante sont intégrés dans la plate-forme de commande (6) et/ou dans le boîtier dans la région de l'oculaire (5), dans lequel la plate-forme de commande (6) présente en direction de l'objectif (2) une ou plusieurs ouvertures d'entrée de lumière (11) pour les capteurs sensibles à la lumière (16).

2. Dispositif de visée téléoptique selon la revendication 1, **caractérisé en ce que** ladite/lesdites une ou plusieurs entrée(s) de lumière (11) est/sont disposée (s) dans une région de bord (14) de la plate-forme de commande (6).

3. Dispositif de visée téléoptique selon une revendication 1 ou 2, **caractérisé en ce que** les capteurs sensibles à la lumière (16) sont logés dans des évidements dans la plate-forme de commande (6) et sont reliés à l'électronique de commande.

4. Dispositif de visée téléoptique selon l'une quelconque des revendications 1 à 3, **caractérisé en ce que** ladite/lesdites une ou plusieurs ouverture(s) d'entrée de lumière (11) présente(nt) une optique (15) pour le guidage de la lumière sur un ou plusieurs capteur(s) sensible(s) à la lumière (16).

5. Dispositif de visée téléoptique selon la revendication 4, **caractérisé en ce que** des faisceaux de rayons de réception de lumière (12) à travers l'optique (15) sont formés dans la ou les ouvertures d'entrée de lumière disposées à distance l'une de l'autre (11), de telle manière qu'ils soient dirigés en direction de l'objectif, le long d'éventuels boutons de réglage (4) d'un réglage de vision ou d'une région de bord extérieur de l'objectif (2), vers l'espace observé à travers l'objectif.

6. Dispositif de visée téléoptique selon l'une quelconque des revendications précédentes, **caractérisé en ce que** l'éclairage du repère de visée peut être réglé en intensité au choix manuellement par l'intermédiaire des commutateurs (7) ou automatiquement par l'électronique de commande, en fonction des conditions de lumière ambiante déterminées à l'aide des capteurs sensibles à la lumière (16).

7. Dispositif de visée téléoptique selon l'une quelconque des revendications précédentes, **caractérisé en ce que** l'électronique de commande présente deux ou plusieurs courbe(s) caractéristiques (20, 23, 27, 28) sélectionnables par des positions de commutateurs (8, 9, 10, 17, 18) avec un niveau différent ou variable pour l'intensité de l'éclairage du repère de visée.

8. Dispositif de visée téléoptique selon la revendication 7, **caractérisé en ce que** le niveau respectif associé aux positions de commutateurs (8, 9, 10, 17, 18) de l'intensité de l'éclairage automatique du repère de visée peut être modifié individuellement avec d'autres éléments de commande ou par l'intermédiaire d'une interface de programmation externe.

9. Dispositif de visée téléoptique selon l'une quelconque des revendications précédentes, **caractérisé en ce que** l'agencement du ou des capteur (s) (16) est conçu pour le raccordement électrique immédiat ou avec un chemin conducteur court à l'électronique de commande dans la plate-forme de commande (6).

10. Dispositif de visée téléoptique selon l'une quelconque des revendications précédentes, **caractérisé en ce que** par un agencement par paires des capteurs (16), un chevauchement d'un domaine de sensibilité photogéométrique à proximité de l'axe optique du dispositif de visée téléoptique pour la pondération d'un domaine central dans la direction d'observation est garanti.
